# EUROPEAN PATENT APPLICATION

(11) **EP 4 685 902 A1**
(43) Date of publication of application: **28.01.2026**
(21) Application number: 24306269.2
(22) Date of filing: 26.07.2024
(51) Int. Cl.: H01M 10/054, H01M 10/0565, H01M 10/0585, H01M 10/46, H01M 10/54, H01M 4/04, H01M 4/131, H01M 4/136, H01M 4/505, H01M 4/58, H01M 4/62, H01M 4/66

(54) **A SODIUM-ION BIOELIMINABLE ELECTROCHEMICAL ACCUMULATOR COMPRISING ELECTRODE PELLETS COATED BY A CURRENT COLLECTOR THIN FILM, ASSOCIATED MANUFACTURING PROCESS AND WIRELESS RECHARGING SOLUTION**

(71) Applicant: Institut Mines Telecom, 91120 Palaiseau (FR)
(72) Inventor: DJENIZIAN, Thierry, 13390 AURIOL (FR); MUNIRAJ, Vedikujilazhagan, 13120 GARDANNE (FR); LATHAKUMARY VIJAYAN, Bincy, 13120 GARDANNE (FR); DELATTRE, Roger, 13180 GIGNAC-LA-NERTHE (FR); RAMUZ, Marc, 13720 LA BOUILLADISSE (FR); HAMMOUD, Hussien, 13003 MARSEILLE (FR)
(74) Representative: Ipsilon

(57) **Abstract**

A Na-ion bioeliminable electrochemical accumulator comprising electrode pellets coated by a current collector thin film, Associated manufacturing process and wireless charging solution.

The invention concerns a sodium-ion (Na-ion) bioeliminable accumulator comprising:
- a substrate (21) of an active biodisintegrable electrode material comprising two main faces, one of which supports at least one bioresorbable thin layer forming a current collector (20), in defining a cathode (2);
- a substrate (21) of an active biodisintegrable electrode (31) material comprising two main faces, one of which supports at least one bioresorbable thin layer forming a current collector (30), in defining an anode (3);
- a biocompatible and degradable polymer electrolyte (10), dried and sandwiched between the two main faces of the cathode (2) and anode (3), opposite to the ones supporting the current collectors (20, 30).

## Description

### Technical field

The present invention relates to the field of electrochemical accumulators, and more particularly sodium-ion (Na-ion) accumulators.

The invention aims primarily to propose a new architecture of such accumulators, which allows them to be bioresorbable, and advantageously could be bendable (flexible), in an animal or a human body.

An accumulator according to the invention can be implemented for powering implantable electronic systems. For example, an accumulator to the invention can be used to power electronic devices such as organic light-emitting diode (OLED), sensors, etc., which is implantable in an animal or a human body. For example, also, an accumulator to the invention can be useful to fulfill the performances requirements of temporary medical devices (TMD) or miniaturized electronics for health Internet of Things (IoT) applications, such as electronic textiles, skin patches, drug delivery microchips, cochlear implants, pacemakers, etc...

### Prior art

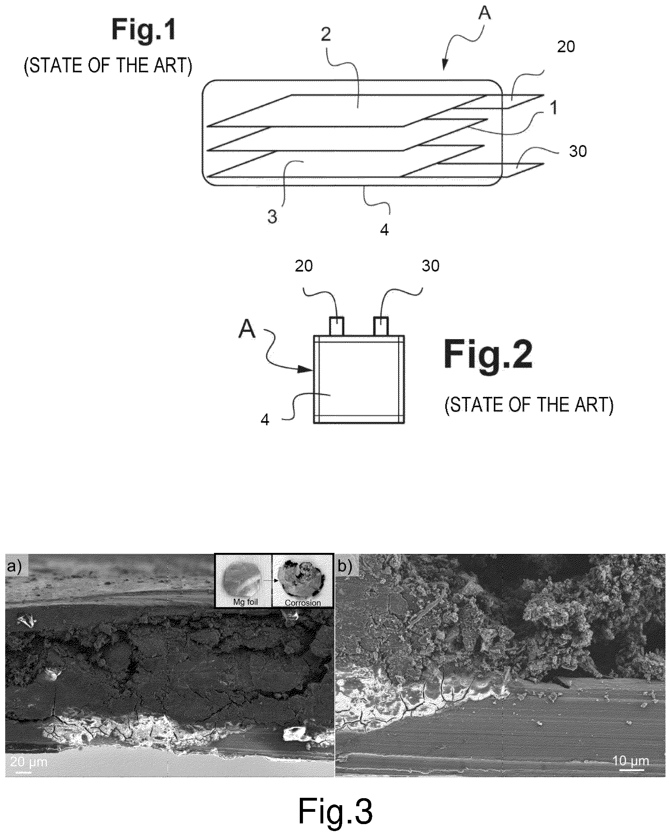

As illustrated schematically in figures 1 and 2, a lithium-ion battery or accumulator normally comprises at least one electrochemical cell consisting of an electrolyte component 1 between a positive electrode or cathode 2 and a negative electrode or anode 3, a current collector 20 connected to the cathode 2, a current collector 30 connected to the anode 3 and, finally, a packaging 4 arranged to contain the electrochemical cell tightly while being passed through by a part of the current collectors 20, 30.

The architecture of the conventional lithium-ion batteries comprises an anode, a cathode and an electrolyte. Several types of geometry of conventional architecture are known:
- a cylindrical geometry as disclosed in the patent application US 2006/0121348;
- a prismatic geometry as disclosed in the patents US 7348098B1, US 7338733B1;
- a stacked geometry as disclosed in the patent applications US 2008/060189, US 2008/0057392, and the patent US 7335448B1.

The electrolyte component 1 can be in solid, liquid or gel form. In this last form, the component can comprise a separator made of polymer, of ceramic or of microporous composite soaked with organic electrolyte or aqueous electrolytes or of ionic liquid type which allows the displacement of the lithium ion from the cathode to the anode for a charge and in reverse for a discharge, which generates the current. The electrolyte is generally a mixture of organic solvents, for example carbonates to which is added a lithium salt, typically LiPF6.

The positive electrode or cathode 2 is composed of lithium cation insertion materials which are generally composite, like LiFePO₄, LiCoO₂, LiNi_{0.33}Mn_{0.33}Co_{0.33}O₂.

The negative electrode or anode 3 is very often composed of graphite carbon or of Li₄TiO₅O₁₂ (titanate material), possibly also based on silicon or composite formed based on silicon.

The current collector 20 connected to the positive electrode is generally made of aluminum.

The current collector 30 connected to the negative electrode is generally made of copper, of nickel-plated copper or of aluminum.

These electrodes 2, 3 for Li-ion accumulators are usually made according to a continuous process by a technique of coating the active insertion material on a metal strip, as current collector, to constitute the active continuous layer. These coating techniques are known by the terms "slot die" or "roll to roll transfer".

A lithium-ion battery or accumulator can obviously comprise a plurality of electrochemical cells which are stacked on top of one another.

Traditionally, a Li-ion battery or accumulator uses a pair of materials on the anode and the cathode allowing it to operate at a high voltage level, typically equal to 3.6 volt.

Depending on the type of application targeted, the aim is to produce either a thin and flexible lithium-ion accumulator or a rigid accumulator: the packaging is then either flexible or rigid and in the latter case constitutes a kind of housing.

The flexible packagings are usually manufactured from a multilayer composite material, composed of a stacking of aluminum layers covered by one or more polymer films laminated by bonding.

The rigid packagings are, for their part, used when the applications targeted are restrictive where a long lifetime is sought, with, for example, much higher pressures to be withstood and a stricter required tightness level, typically less than 10⁻⁸ mbar.l/s, or in highly restrictive environments such as the aeronautic or space field.

For some applications, the main drawbacks of the traditional geometries of conventional architecture, which has been described above are that they are bulky, heavy, and rigid whatever their electrochemistry and their flexible or rigid packagings. For example, because of the recent increasing interest to developing small, rapid, and portable electronic devices it is becoming critically important to provide matching light and flexible energy-storage systems to power them.

To this end, lithium-ion batteries called as Linear fiber-shaped Li-ion Batteries (LIB) have become increasingly important owing to their advantages of miniaturization, conformability, and weavability.

Bioresorbable micro-batteries are particularly attractive for powering implantable electronic systems, but such body safe devices have also a strong impact for a larger spectrum of Internet of Things (IoT) applications such as TMDs, electronic textiles, skin patches, drug delivery microchips, cochlear implants, etc.

In addition, the conception of biodegradable batteries is highly interesting for providing energy to environment friendly wearable devices like abandoned sensors and solving the crucial issue of material recycling.

Among all energy solutions for implantable bioelectronics, rechargeable microgenerators for low-consumption electronics relies mainly on the lithium (Li) based technologies (LIBs) owing to several advantages such as high energy and power densities, versatility, span life...: [1], [2] and in terms of abundance, uniform distribution, low cost, and easy recycling: [3].

However, these batteries encapsulating toxic elements, such as highly toxic electrodes and electrolyte and non-biodegradable metallic current collectors and plastic packaging, which enhances the lifespan of the battery in the environment for several decades even after disposal. Such batteries are dangerous if exposed inside a human body during the incorporation of health implants and can even cause mortality. Thus, they cannot be safely degraded and must be removed by surgery and recycled after use.

Hence, efforts have been devoted to biocompatible self-degradable batteries: [4].

Currently, most bioresorbable devices consist of primary systems using metallic electrodes, e.g., Mg, Zn, Mo, etc., and liquid electrolytes, in general a biological fluid like blood, saliva, urine, which are responsible for fluctuating electrochemical performances.

Although solid-state and gel-like electrolytes have been proposed, the formation of byproducts are hindering the electrode properties. In anyway, this type of batteries is not rechargeable and remain cumbersome, limiting their practical use: [5].

Besides the electrochemical performances and biodegradability features, the ideal batteries for IoT dedicated to medical implants should also be ultrathin, light, flexible, and fully integrable. Their manufacturing should also be compatible with Integrated Circuit technologies and microelectronic processes.

Therefore, the challenging task is to design flexible energy storage micro batteries showing high electrochemical performances that can be degraded by biological fluids and safely removed by the body.

Based on similar mechanism than LIBs, the very recent Sodium-ion Batteries (SIB) offer a promising alternative as the main components of the batteries can be non-toxic and biocompatible.

Thus, Na-ion based bioresorbable secondary batteries emerge as favorable power sources for ephemeral medical implants due to their relatively higher energy density and continuous power output. Typically composed of bioresorbable electrodes, electrolytes, and current collectors. These battery components independently undergo degradation into non-toxic constituents within the physiological environment during and/or after battery operations.

The development of an effective bioresorbable battery is the crucial step forward in proceeding with the practical in-vivo applications of bioresorbable electronics in the field of temporary medical implants. Typically, an implanted pacemaker is powered by electrolytic capacitor which are removed after the desired purpose by major surgical procedures.

The electrolyte is a key component that governs the electrochemistry in a battery, but related research for SIBs is currently at the early stage.

Commonly used organic electrolytes have poor thermal stability, high flammability, and low heat capacity. In addition, organic electrolytes are potential hazards due to their volatility and toxicity.

Safer and sustainable polymer electrolytes represent the best choice to overcome these limitations: [6].

Solid polymer electrolytes (SPE) still suffer from key drawbacks, including their low ionic conductivity and high interfacial resistance. Gel polymer electrolytes (GPEs) on the other hand combine the advantages of SPEs and conventional liquid electrolytes and provide a route toward the rational design of SIBs with improved safety performance and especially flexibility. However, to date, their development for SIBs is at the very early stage.

In addition, the fabrication of all-solid-state Na-ion micro-batteries (SIMs) is in its infancy, which justifies their study for developing new bioresorbable flexible energy storage devices.

Among the few complete cells reported so far, the authors of publication have fabricated a quasi-solid-state planar ionogel-based SIM, reaching 145 µWh.cm⁻², which was obtained by separator-free interdigital microelectrodes of sodium titanate anode and sodium vanadate phosphate cathode, embedded into a three-dimensional interconnected graphene scaffold: [7].

3D-printed SIMs has been also investigated: [8]. The resulting thick SIMs, of a thickness of 1200 µm thick, showed a rate capability of 3.6 mAh.cM⁻² at 40 mA.cm⁻² and robust long-term cycle life up to 6000 cycles.

In terms of biocompatible batteries, efforts have been also devoted to aqueous Na-ion batteries.

Family of flexible belt- and fiber-shaped aqueous systems have been studied in various Na+/- containing aqueous electrolytes including a Na₂SO₄ solution, normal saline, and cell-culture medium: [9].

Symmetric SIMs obtained from interdigitated Na₂VTi(PO₄)₃/C based electrodes and different aqueous electrolytes like simulated body fluids have been also tested: [10].

Another recent study reported on a bioresorbable zinc primary battery anode filament based on a zinc microparticle (MP) network coated with chitosan and Al₂O₃ double shells: [11]. Which again has used gold-based films and silver paste for interconnections. And the authors have shown application for biodegradability rather than fully bioresorbability.

There is a need to further improve the Na-ion accumulator solutions, notably with good electrochemical performances (high energy and/or power densities and/or area capacity and/or cycling stability and/or rate capability) and to render them implantable under skin and entirely bioeliminable, and advantageously flexible.

The aim of the invention is to address such need at least partly.

### Summary of the invention

To do this, the invention relates, under one of its aspects, to a Na-ion bioeliminable accumulator, comprising:
- a substrate of an active biodesintegrable electrode material comprising two main faces, one of which supports at least one conductive biocompatible and degradable thin layer forming a current collector, in defining a cathode;
- a substrate of an active biodesintegrable electrode material comprising two main faces, one of which supports at least one conductive biocompatible and degradable thin layer forming a current collector, in defining an anode;
- a biocompatible and degradable polymer electrolyte, dried and sandwiched between the two main faces of the cathode and anode, opposite to the ones supporting the current collectors.

By "*thin layer*", it has to be understood here and in the framework of the invention, the usual meaning, i.e. a layer of material ranging from fractions of a nanometer (monolayer) to several micrometers in thickness.

Advantageously, the substrate of the cathode and/or the anode is under the form of a pellet, notably of a cylindrical geometry.

According to an advantageous variant, the thin layer of magnesium (Mg), molybdenum (Mo), tungsten (W) or zinc (Zn) to form a first and/or the second collector. Other biocompatible materials which can be deposited by PVD techniques and be implementable, can be foreseen. Depending on the porosity of the pellet electrode, current collector thickness can range between 10 to 1000 nm.

Before to be shaped as a substrate, notably under pellets, the active materials are then formulated as electrode slurries, with binder and carbon. Aqueous processing using binder like CMC, sodium alginate, polyvenyl alcohol (PVA), agarose, Polyethylene glycolimproves the sustainability and environmental impact of the battery technology. these polymers have been selected as they are not toxic and shows good solubility in water, low cost, biodegradability, and biocompatibility. The weight percentages of the active material, conductive carbon and binder components can be adapted.

Na_{0.44}MnO₂ (NMO) has been designated as it is regarded as one of the most promising (SIB) cathodes owing to its low cost, simple preparation, large capacity of 121 mAh.g⁻¹, and high stability: [10].

Thus, according to another advantageous embodiment, the active material of the positive electrode is made of Na_{0.44}MnO₂ (NMO). All biocompatible sodiated oxide materials can be implemented as active material of the positive electrode.

According to this embodiment, and an advantageous variant, the material is obtained by mixing 80 wt % NMO with 15 wt % acetylene black and with 5 wt % Na- sodium alginate using water as a solvent.

NMO orthorhombic structure are favorable to transport the relatively large Na+ and capable of tolerating the stress generated during charging/discharging.

NaTi₂(PO₄)₃ (NTP), which large capacity of 133 mAh.g⁻¹, has been selected as negative electrode material due to delivering high performance toward NMO:[11].

According to an advantageous embodiment, the active material of the negative electrode is made of a NaTi₂(PO₄)₃ carbon (NTP-C) composite. All biocompatible materials, such as oxide materials or porous silicon can be implemented as active material of the negative electrode.

According to this embodiment, and an advantageous variant, the material is obtained by mixing NTP-C with acetylene black, Na₂SO₄ electrolyte salt and sodium alginate using water as a solvent.

According to another advantageous embodiment, the polymer electrolyte is a gel polymer composed of an ionic conductor polymer and a Na salt.

According to this embodiment, and an advantageous variant, the ionic conductor polymer may be selected among sodium alginate, sodium carboxymethyl cellulose (Na-CMC), polyethylene glycol (PEG), agarose, polyvenyl alcohol, polyethylene-polypropylene glycol copolymer .... Biocompatible Gel Polymer Electrolyte (GPE) can be implemented as polymer electrolyte.

According to this embodiment, and an advantageous variant, the Na salt may be selected among Na₂SO₄, Na₂SO₃, NaI, sodium acetate, phosphate buffer saline (PBS)....All biocompatible sodium salts, such as NaCl, can be implemented.

The invention relates also to a wireless charging accumulator (WRA), comprising:
- a sodium-ion (Na-ion) bioeliminable accumulator such as described above,
- a wireless inductive charger stacked and electrically connected together with the accumulator.

The invention relates, under another aspect, to a process of manufacturing a sodium-ion (Na-ion) bioeliminable accumulator), including the following steps consisting in:
i/ for each of a cathode and an anode, making a wet mixture of electrode active biocompatible and degradable electrode material, a binder, and a biocompatible conductive agent; pressing said wet mixture and drying to form a substrate;
ii/ preparing a gel electrolyte by dissolving a biocompatible and degradable polymer electrolyte in water;
iii/ for each of the anode and the cathode, coating a layer of gel electrolyte onto one main face of one of the electrode substrate, then sandwiching said coatings by placing the two electrode substrates face-to-face, and applying a physical contact force.
iv/ for each of the anode and the cathode, depositing onto the main face of the electrode substrate, opposite to the one supporting the electrolyte gel, a thin layer of a at least one conductive biocompatible and degradable metal to form a current collector.

According to an advantageous variant, the wet mixture of step i/ comprises an electrolyte salt. It allows to improve the ionic conductivity and durability of the Na-ion fully bioresorbable all solid-state battery.

According this advantageous variant, the wet mixture comprises preferably the electrode active material, the binder, a carbon black as the biocompatible conductive agent, the electrolyte salt and water as the solvent.

Advantageously, step i/ consists of introducing the wet mixture in a mold to make the substrate by pressing with a die and left to dry for 1 to 24 h range in a 60 to 120 °C range of temperature in a vacuum oven.

According to another advantageous variant, step ii/ consists of dissolving the polymer electrolyte in deionized water under ultrasonication at 20 to 80 °C.

Preferably, step iii/ comprises a step iii1/ according to which the electrolyte layer is dried in oven for 30 minutes to 24 h at 60 to 120 °C until said gel layer is dried.

According to an advantageous embodiment, step iv/ deposition is achieved by a Physical Vapor Deposition (PVD) method, either by evaporation or sputtering, or a chemical vapor deposition (CVD). PVD techniques allows to protect the metal (Mg, Mo, W, Zn) of the thin layer from the corrosion.

Thus, the invention consists essentially in a sodium-ion micro-battery only composed of biocompatible materials that can be degraded and eliminated by biological fluids which results from on the assembly of two substrate form electrodes, notably under pellet form, with polymer electrolyte and a bioresorbable metallic current collector deposited on both exterior faces of such assembly, preferably by a physical vapour deposition process to complete the full battery formation.

All components are bioeliminable individually and in combination as a whole electrode. to be bioresorbable individually and electrochemically active during the battery operations. For example, the electrode materials chosen are from sodium titanium phosphate, sodium manganese oxide, electrode additives were chosen from high conducting carbon black which was known for its application in tattoo industry. Binders were chosen from Na-CMC or Na alginate. Water as solvent to prepare the electrodes. A gel electrolyte was made of sodium sulfate as salt and bioresorbable Na-CMC or Na alginate served as ionic conductive matrix.

A thin layer used as current collector leads to strong decrease of the current collector thickness compared to the prior art whereas improves the mechanical properties, notably with a higher flexibility. This thin layer has the main advantage to be rapidly dissolved in body fluid, notably at a speed of 0.05-0.5 µm/h.

In an advantageous embodiment, bioresorbable Na₂SO₄ is used in sodium alginate as polymer electrolyte in combination with sodium titanium phosphate and sodium manganese oxide electrodes.

The proposed solution in the present invention allows to decompose battery within body fluids safely and rapidly and harmlessly.

The solution satisfies the bioresorbable properties of each cell components utilized and the electrochemical charge-storage discharge is highly promising than the reports according to the prior art. In this prior art, claimed bioresorbable batteries are not satisfying as they still use non bioresorbable current collectors such as gold, stainless steel along with non-biodegradable polymer binders like PTFE.

The invention also concerns a use a bioeliminable accumulator or the wireless charging accumulator such as mentioned above to supply energy for wearable technologies and health IOT including TMD, bioelectronics, human implants, bioelectronic devices dedicated to human/machine interfaces.

Thus, the invention can truly lay the foundation of a future energy solution for healthcare IoT by powering subdermal implanted devices and systems for in-vivo sensing, able to operate in the body for a prescribed time and detect specific disease biomarkers/drugs, transmit physiologic relevant data on-demand and wirelessly (e.g., red/NIR light or radio frequency - RFID) through the skin, until the entire system will be fully and safely bio-resorbed.

An implantable and bioeliminable battery according to the invention can also deeply penetrate other IoT markets as the crucial recycling issue of toxic components can be overcome.

Other advantages and features of the invention will emerge more clearly on reading the detailed description of exemplary implementations of the invention given in an illustrative and nonlimiting manner with reference to the following figures.

### Brief description of the drawings

[Fig 1] figure 1 is an exploded perspective schematic view showing the different elements of an accumulator.
[Fig 2] figure 2 is a front view showing an accumulator with its flexible packaging according to the state of the art.
[Fig 3] figure 3 are images made by scanning electron microscope (SEM) of a full Na-ion accumulator according to prior art, made with a Mg current collector foil manufactured by a conventional battery process, respectively as soon as the manufacturing process has been achieved and along time showing the corrosion of the accumulator.
[Fig 4] figure 4 is a schematical view of a manufacturing process of a sodium-ion bioeliminable battery according to the invention.
[Fig 5] figures 5 are images made by scanning electron microscope (SEM) and corresponding EDS (energy dispersive spectroscopy) analysis of a bioeliminable battery according to the invention:
   - [Fig 5A] figure 5A is a SEM topography of pellet electrode (inset shows photograph of bare pellet surface);
   - [Fig 5B] figure 5B shows nanoflakes form Mg deposition layer onto the pellet electrode by PVD process, inset depicts photographical image of Mg covered pellet surface;
   - [Fig 5C] figure 5C corresponds to the cross-sectional view of fabricated full cell;
   - [Fig 5D] to [Fig 5I] figures 5D to 5I are EDS elemental mapping simulated the presence of corresponding dominant elements from cross sectional view of the full cell;
   - [Fig 5J] figure 5J is a cross-sectional EDS map reveals distinct layers through color-coded elements overlaid on SEM image, distinguishing an electrolyte layer between NMO (blue) and NTPC (green) electrodes.
[Fig 6] figure 6 is a rate performance at various C-rates using galvanostatic charge/discharge method of a bioeliminable battery according to the invention.
[Fig 7] figures 7 are SEM images showing the time evolution of biodegradation of a Mg coated NMO, NTPC pellet electrodes from in vivo study of an active mouse:
   - [Fig 7A], [Fig 7B], [Fig 7C] figures 7A, 7B, 7C concern samples of natural mouse skin, Mg-NMO implanted mouse skin, and Mg-NTPC implanted mouse skin after in-vivo tests in a mouse;
   - [Fig 7D], [Fig 7E], [Fig 7F] figures 7D, 7E, 7F are respectively a histogram of the element details in weight % obtained from the EDS analysis of natural skin, Mg-NMO implanted skin and Mg-NTPC implanted mouse skin material.
[Fig 8] figures 8 are photographic images showing an invitro study of disintegration of PLGA encapsulated bioeliminable battery with the time evolution of biodegradation in phosphate buffer saline mimics biological fluids.
[Fig 9] figures 9 are wireless rechargeability test using an inductive charger circuit encompassed a bioeliminable battery system for the final circuit presenting the interconnection of the bioresorbable battery, and RF transmitter charger:
- [Fig 9A] figure 9A shows the two distinctive systems with their electrical connection encompassed such as wireless inductive charger circuit placed atop a bioeliminable battery according to the invention;
- [Fig 9B] figure 9B is an illustration of operation of charging the implanted bioeliminable battery equipped with a wireless charger from a distance.

### Detailed description

Figures 1 to 2 relate to different examples of accumulators, with flexible packagings according to the state of the art.

These figures 1 to 2 have already been commented on in the preamble and will not therefore be discussed further hereinbelow.

For clarity, the same references designating the same elements according to the state of the art and according to the invention are used for all the figures 1 and 2.

The inventors have prepared a Na-ion bioeliminable battery according to a manufacturing process fabrication according to the prior art.

A Na_{0.44}MnO₂ (NMO) slurry was coated, by a Doctor blade coating, on a Mg foil of a 25 µm thickness, as a current collector, and these components were dried in an oven at 90 °C to obtain a positive electrode.

A C/NaTi₂(PO₄)₃ slurry form was coated, by a Doctor blade coating, on a Mg foil of a 25 µm thickness, as a current collector, and these components were dried in an oven at 90 °C to obtain a negative electrode.

Then, a gel electrolyte based on a ionic conductor polymer of sodium alginate was applied on one of the electrode surface, on the main face opposite to the Mg foil, and dried at 60 °C.

And the positive and the negative electrodes, with the gel electrolyte between them were assembled together.

During this assembly step, the corrosion started to be seen on the Mg surface and became nonfunctional electrochemical cell. This can be seen on Figure 3(a) which shows such corrosion process occurred during the fabrication of a full electrochemical with the top and bottom Mg foils. Figure 3(b) clearly visualizes the beginning of corrosion at the Mg foil at the bottom and propagates into the active electrode layer.

Hence, the inventors have thought to a new architecture of Na-ion micro-battery obtained by a novel fabrication process which consists essentially after having shaped electrodes in a substrate form, to deposit onto each said substrate, by physical vapor deposition process, (PVD) a thin layer of biocompatible material to achieve current collectors.

As demonstrated below, this process effectively avoids the corrosion of the current collectors when it comes in contact with water at the presence of electrolyte salt.

A Na-ion bioeliminable battery A according to the invention includes the following components:
- a substrate under the form of a pellet 21 of an active biocompatible and degradable electrode material comprising two main faces, one of which supports at least one conductive biocompatible and degradable thin layer forming a current collector 20, in defining a cathode 2;
- a substrate under the form of a pellet 31 of an active biocompatible and degradable electrode material comprising two main faces, one of which supports at least one conductive biocompatible and degradable thin layer forming a current collector 30, in defining an anode 3;
- a biocompatible and degradable polymer electrolyte 10, dried and sandwiched between the two main faces of the cathode 2 and anode 3, opposite to the ones supporting the current collectors 20, 30.

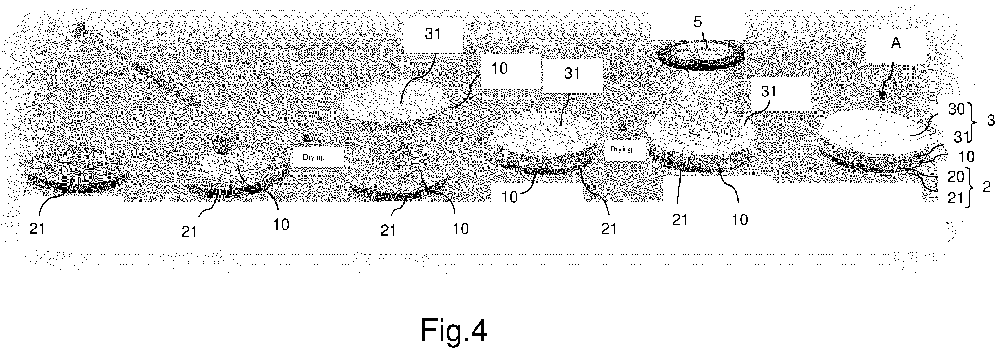

Figure 4 represents a synoptic of a manufacturing process of Na-ion bioeliminable battery according to the invention, where the substrate of electrode is under the form of pellet and the thin layer material is Mg. This bioeliminable battery is thus configured to be implantable under skin and entirely bioresorbable.

The process includes the following steps.

Step i/ (Pellet Electrode fabrication): A wet mixture of electrode active material, a binder, carbon black (biocompatible conductive agent), and electrolyte salt were taken at different ratios, and the water served as the solvent. For the ratio (in %) electrode active material can range between 60 and 98, a binder can range between 15 and 1, biocompatible conductive agent can vary between 35 and 1, and electrolyte additive can vary between 15 and 1.

For the positive electrode, the material was Na_{0.44}MnO₂ (NMO). This material is a sodium-ion biocompatible cathode, and its advantages are low cost, simple preparation, large capacity (121 mAh.g-1 vs. Na+/Na) and high stability. Sodium alginate was the biocompatible binder using water as a solvent.

For the negative electrode, the material was C/NaTi₂(PO₄)₃ (NTPC). is a titanium based NASICON compound, typically NaTi2(PO4)3 (NTP). This material is considered as super ionic conductor and biocompatible electrode material that possess high specific capacity, good structural stability, and cyclability for non-aqueous sodium ion batteries. However, pure NTP suffers from poor electronic conductivity, so in order to remove the electronic conductivity limitation the synthesis of NTP is further optimized by mixing it with carbon in order to obtain ultrafast rate capability and superior high-rate cycling stability. The synthesis of NTP-C has been achieved by a solid-state method. Sodium alginate was the biocompatible binder using water as a solvent.

The wet electrode mixture was filled in a round mold to make a self-standing film under a pellet form by pressing with die and left to dry for 1 to 24 h range in a 60 to 120 °C range of temperature in vacuum oven.

The diameter of the obtained electrode pellet 21, 31 is made any desired size and shape.

Step ii/ (preparation of gel electrolyte): Sodium sulfate or salts of phosphate buffer saline (PBS) with alginic acid sodium, aka sodium alginate or Na-CMC, were taken at a various ratio and dissolved in deionized water under ultrasonication at 20 to 85 °C.

A gel electrolyte 10 was obtained after an hour of the sonication.

Step iii/ (full cell assembly): Firstly, a thin layer of gel electrolyte 10 was coated onto one main face of one of the pellet electrode surface 21. This coating can be achieved with a syringe. Thus, the gel electrolyte layer 10 was dried in oven for 30 minutes to 24 h at 60 to 120 °C until said gel layer 10 dried thoroughly.

After drying, another thin layer of gel 10 was again coated over one main face of the other pellet electrode 31 to make it wet.

Then, it was sandwiched by placing the pellet electrode 21 face-to-face, and a physical force was applied.

Then, this cell assembly was dried for 30 minutes to 24 h at 60 to 120 °C until the gel layer dried thoroughly.

Step iv/ (Magnesium deposition): As fabricated full cell assembly was subjected to Mg deposition by PVD method, notably by evaporator or sputtering from a target 5.

Thus, thin layer of Mg, as bioresorbable metal, as current collector 20, 30 was deposited on top of the assembled cells on each side subsequently, namely on both main faces of pellet electrodes 21, 31 opposite to the ones supporting the electrolyte gel 10. Typically, the uniform thickness of the Mg layer is 600 nm.

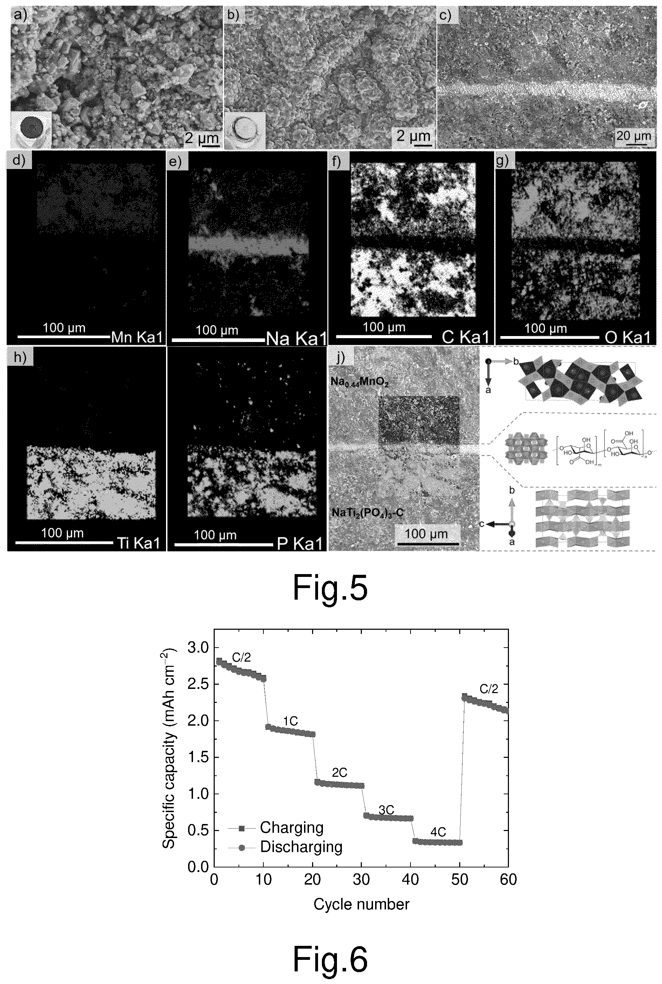

Figure 5 (a) and (b) are the photographical images of a pellet electrode before (black) and after Mg PVD deposition (metallic).

Figure 5(a) depicts the electrode particles from bare surface of a pellet electrode.

Figure 5(b) shows the topography of a Mg layer after fully covered the active electrode surface of a pellet. Interestingly, the PVD deposited Mg possessed a homogeneously spread flakey flower like nanostructures.

Figure 5(c) depicts a cross-sectional analysis using SEM equipped with EDS. For this analysis, an assembled battery was cryogenically frozen, sectioned, and then rapidly polished to prepare the cross-section.

A magnified view of the battery core in Figure 5(c) reveals a seamless integration of the solid electrolyte with both NTPC and NMO surfaces.

Furthermore, the EDS analysis (Figures 5d-i) identifies the presence of key elements such as Mn from NMO, Na from the electrolyte, Ti from NTPC, along with C, O, and P.

The elemental mapping in Figure 5(g) facilitates the clear distinction of the battery components, highlighting the spatial distribution of these elements within the cross-section.

Then, this full cell constitutes an accumulator A, which was ready to be electrochemically tested, notably at different C rates.

Electrochemical charge storage tests were performed for an accumulator A obtained with pellets 21, 31 on which Mg thin layer as currents 20, 30 were deposited.

To improve the ionic conductivity and durability of this Na-ion based fully bioeliminable all solid-state battery A, electrodes were impregnated by the gel electrolyte consisting of sodium alginate and Na2SO4 as electrolyte salt, during step i/, i.e. prior to the step of assembly.

This pre-administrated electrolyte variant resulted promising charge-discharge performance of all solid bioresorbable battery. Indeed, as shown on Figure 6, the areal capacity was as high as 2.56 mAh cm⁻² at a C/2 with an operating potential range of 0 to 1.5 V and a coulombic efficiency was 98 %.

### In vivo tests in mice

Surface analysis of the bioeliminable battery after in vivo tests were analyzed which provides valuable insights into the degradation of the battery under working conditions and the chemical mechanisms involved in bioeliminable. For EDS analysis small pieces of mouse skin were obtained from the area of implanted battery after 4 months of placement of bioeliminable battery into mouse.

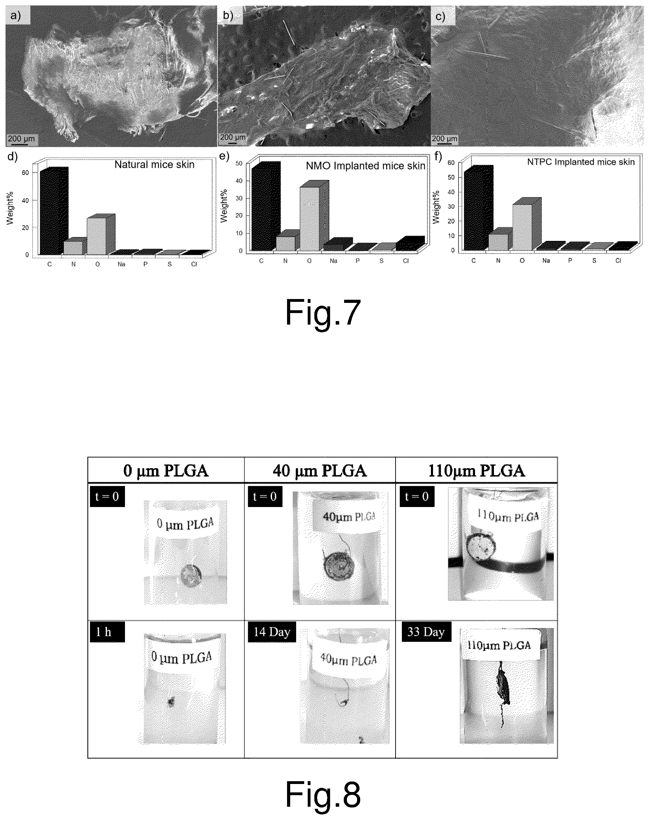

For in vivo implantation of bioeliminable battery in mouse, an Mg coated by PVD on NMO (figure 7a) and NTPC (figure 7b) electrodes had been separately implanted. For comparison a small piece of natural skin was used from mouse (figure 7c). A small skin sample was mounted on a carbon-taped SEM stub and analyzed for the presence of key elements such as Mg, Na, Mn, Ti, P, O, and C, corresponding to the implanted electrodes.

From Tables (1-3), the EDS analysis shows the absence of Magnesium, Titanium, and Manganese in the electrode samples implanted in the mouse. A small percentage of Na, up to 2%, could be attributed to natural skin components, such as salts from sweating. This was confirmed by the EDS analysis of bare natural mouse skin, as shown in Figure 7a, where the Na peak is clearly observed. The EDS analysis of the sample after the in vivo study of the bioresorbable battery indicates the complete disintegration of the implanted battery. The materials selected for the battery components are highly suitable for bioimplantation applications without harming healthy biological tissues.

Tables below summarize this quantitative analysis.

**[Table 1]: elements present in natural mouse skin and a corresponding histogram is shown in figure 7(d):**

| **Element** | **Weight%** | **Atomic%** |
|---|---|---|
| C K | 61.02 | 67.44 |
| N K | 9.82 | 9.31 |
| O K | 26.60 | 22.07 |
| Na K | 0.71 | 0.41 |
| P K | 1.07 | 0.46 |
| S K | 0.42 | 0.17 |
| Cl K | 0.37 | 0.14 |
| Totals | 100.00 | |

**[Table 2]: elements traced from Mg-NMO sample implanted mouse skin and a corresponding histogram is shown in figure 7e:**

| **Element** | **Weight%** | **Atomic%** |
|---|---|---|
| C K | 52.27 | 58.88 |
| N K | 12.02 | 11.61 |
| O K | 33.78 | 28.57 |
| Na K | 0.77 | 0.46 |
| P K | 0.31 | 0.13 |
| S K | 0.47 | 0.20 |
| Cl K | 0.43 | 0.16 |
| Totals | 100.00 | |

**[Table 3]: elements traced from Mg-NTPC sample implanted mouse skin and a corresponding histogram is shown in figure 7(f):**

| **Element** | **Weight%** | **Atomic%** |
|---|---|---|
| C K | 46.90 | 55.35 |
| N K | 8.05 | 8.15 |
| O K | 36.41 | 32.26 |
| Na K | 3.46 | 2.14 |
| P K | 0.28 | 0.13 |
| S K | 0.48 | 0.21 |
| Cl K | 4.42 | 1.77 |
| Totals | 100.00 | |

### Disintegration study in simulated biological fluid

A Na_{0.44}MnO₂ (NMO) electrode slurry composed of 60 to 98 % of NMO; 35 to 1% Carbon black; 15-1% sodium alginate and 15-1 sodium sulphate was prepared.

In vitro tests were performed on a PLGA-encapsulated bioeliminable battery to estimate the disintegration time of the NIB in body fluid after implantation. Degradation tests of the different battery materials were conducted in an aqueous environment using classical Phosphate Buffered Saline (PBS) solution at a controlled temperature of 37°C.

The dissolution kinetics of each battery component were determined to reliably estimate the battery's lifespan in a biological medium, similar to previous studies on implantable neural probes.

Figure 8 represents three types of samples immersed in PBS solution (static solution) where a battery without PLGA encapsulation and PLGA with 40 and 110 µm thickness. The bare battery indicated immediately began to disintegrate into PBS and took hardly 1h to disperse fully.

On the other hand, a very thin 40 µm PLGA showed completely dispersed into PBS in 14 days. Whereas thicker PLGA coating of 110 µm has significantly enhanced the disintegration period of encapsulated bioeliminable battery and which took 4 weeks period to disintegrate fully.

### Rechargeability of wireless Results

As a proof of feasibility, to be fully implantable, one should be able to recharge the bioeliminable battery through the skin.

To that end, a wireless inductive charger 6 was developed in order to recharge the battery A from outside the body.

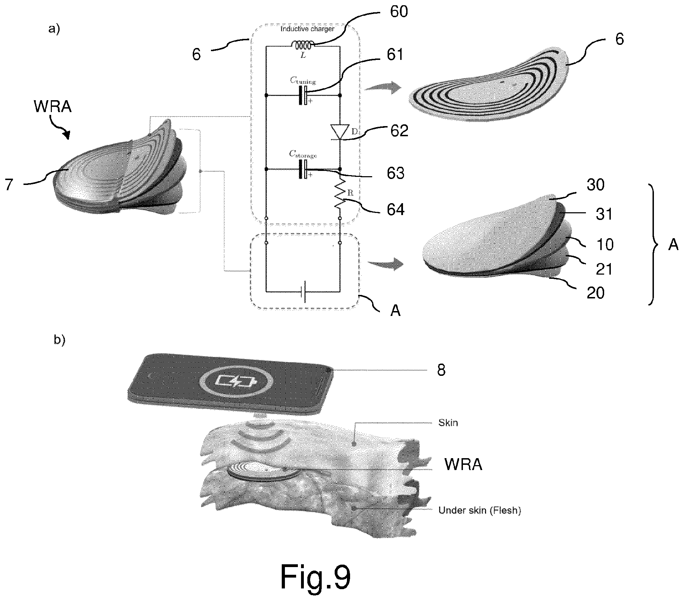

One example of the circuit used for such a charger 6 is presented on Figure 9a and comprises:
- an inductance 60, i.e. a planar coil that will be magnetically coupled to an external transponder 7,
- a tuning capacitor 61 in electrical parallel to the planar coil 60, in order to optimize the coupling between the planar coil 60 and an external transponder 8,
- a rectifying diode 62 in electrical series with the planar coil 60to keep only positive waves of the alternative current power generated through the coil 60,
- a smoothing capacitor 63 in electrical parallel to the planar coil 60, to convert the alternative current into a direct current power;
- a serial resistor 64 in electrical series with the planar coil 60, to limit the maximum current flowing into the battery A.

The wireless inductive charger 6 and the battery A are finally stacked, electrically connected together and encompassed in a biocompatible film 7 to form a wireless charging battery (WRA). This film 7 may be in PLGA (poly(lactic-co-glycolic) acid. Other materials can be implemented such as PVA, Degrapol, etc...

The rapid disintegration time of the battery (only one hour *in vitro*) is particularly interesting because the lifespan of the implanted battery can simply be controlled by tuning the thickness of a soluble encapsulation layer. In this work, dip-coating technique was used to encapsulate the batteries by poly(lactic-co-glycolic) acid (PLGA) layers 7 showing different thicknesses (ie, 40, 110 and 250 µm). The thicker the PLGA layer, the longer lifetime of implanted battery.

In an experiment, the inventors have implemented an external transponder 8, which is a CR95HF RF transceiver board from ST Microelectronics, made for Near Field Communication (NFC) demonstration.

NFC was chosen since it is available in most of the current handheld devices and is already used in Wireless Charging (WLC) of wearables devices such as earbuds, styluses, fitness trackers or hearing aids.

In order to mimic a wireless charging of the implanted battery WRA, the skin of a mouse was laid in between the transponder and the wireless charger as illustrated in Figure 9b.

Galvanostatic charge-discharge curves were obtained by wirelessly charging the battery as detailed in the experimental method section. During these cycles, an average of 1.3 mAh cm⁻² was found for the specific capacity.

These results highlight the suitability of rechargeable batteries for medical implantable applications.

The proposed solution, based on NFC standard, can also easily be deployed in hospital or even for self-medical monitoring at home. This study demonstrates a proof of concept of wirelessly charging a bioeliminable battery through the skin.

In its simplest form, the wireless charging circuit 6 is only composed of four bioresorbable components 60, 61, 62, 63 to be operational. An example can be found in literature: [12] . For instance, the planar coil and resistor can be patterned in magnesium tracks to ensure biodegradability and literature provides functional examples of biodegradable capacitors and diodes. In the event that more power is needed, one may envision to complexify slightly this circuit by replacing the rectifying diode with a full diode bridge rectifier.

Thus, these results validate the biocompatibility feature of the cathode 2 of a micro-battery A according to the invention.

The invention is not limited to the examples which have just been described; characteristics of the examples illustrated can notably be combined with one another in variants that are not illustrated.

Other variants and enhancements can be envisaged without departing from the scope of the invention.

For example, instead of Mg as biodegradable material, it can be foreseen to implement a thin layer of Mo or Tungsten or Zinc can be layered for example by sputtering or thermal evaporation onto an electrode material substrate to form a current collector.

Instead of sodium alginate an ionic conducting polymer electrolyte matrix, Na-CMC or polyethylene glycol (PEG) or agarose or polyethylene-polypropylene copolymer can be implemented.

Instead of sodium sulphate (Na₂SO₄) electrolyte salt, Na2SO3 or NaI or sodium acetate or salts of phosphate buffer saline (PBS) can be implemented.

Instead of carbon black as conducting additive, conducting polymers such as PEDOT:PSS or poly-N-phenylglycine, polypyrrole (PPy) can be implemented.

### List of references cited:

[1] : Sheng et al., "Recent Advances of Energy Solutions for Implantable Bioelectronics," Adv. Healthc. Mater. 10, 2100199 (2021).
[2] : S. Mukherjee, A. Albertengo, T. Djenizian, "Beyond flexible Li-ion battery systems for soft electronics," Energy Storage Mater. 42, 773 (2021).
[3]: P. Johansson, et al., "Na-Ion Batteries - State of the Art and Prospects, in Series on Chemistry, Energy and the Environment, Prospects for Li-ion Batteries and Emerging Energy Electrochemical Systems," pp. 161-235 (2018).
[4]: S. Stauss, et al., "Biocompatible Batteries-Materials and Chemistry, Fabrication, Applications, and Future Prospects," Bull. Chem. Soc. Jpn. 91, 492, (2018).
[5]: X. Huang, et al, "A Fully Biodegradable Battery for Self-Powered Transients Implants", Small, 14, 1800994 (2018).
[6]: F. Gebert, et al., "Polymer electrolytes for sodium-ion batteries", Energy Storage Mater. 36, 10, (2021).
[7]: S. Zheng, et al.,"Ionogel-based sodium ion micro-batteries with a 3D Na-ion diffusion mechanism enable ultrahigh rate capability", Energy Environ. Sci. 13, 821 (2020).
[8]: J. Ma, et al., "3D Printing Flexible Sodium-Ion Micro batteries with Ultrahigh Areal Capacity and Robust Rate Capability", Adv. Mater. 34, 2205569 (2022).
[9]: Z. Guo et al., "Multi-functional Flexible Aqueous Sodium-ion Batteries with High Safety", Chem. 3, 348 (2017).
[10]: X. Zhou, et al., "Research progress of tunnel-structured Na0.44Mn02 cathode for sodium-ion batteries: a mini review", Electrochem. Com. 122, 106897 (2021).
[11]: Dong, Y., Li, J., Yang, F., Wang, Y., Zhang, Z., Wang, J., Long, Y. and Wang, X., "Bioresorbable primary battery anodes built on core-double-shell zinc microparticle networks". ACS Applied Materials & Interfaces, 2021, 13, pp.14275-14282.
[12]: Jahyun Koo and al. "Wireless bioresorbable electronic system enables sustained nonpharmacological neuroregenerative therapy", Nature medicine 24.12 (2018): 1830-1836.

## Claims

1. A sodium-ion (Na-ion) bioeliminable accumulator comprising:
- a substrate (21) of an active biodisintegrable electrode material comprising two main faces, one of which supports at least one bioresorbable thin layer forming a current collector (20), in defining a cathode (2);
- a substrate (21) of an active biodisintegrable electrode (31) material comprising two main faces, one of which supports at least one bioresorbable thin layer forming a current collector (30), in defining an anode (3);
- a biocompatible and degradable polymer electrolyte (10), dried and sandwiched between the two main faces of the cathode (2) and anode (3), opposite to the ones supporting the current collectors (20, 30).

2. The sodium-ion (Na-ion) bioeliminable accumulator according to Claim 1, wherein the substrate of the cathode and/or the anode is under the form of a pellet, notably of a cylindrical geometry.

3. The sodium-ion (Na-ion) bioeliminable accumulator according to Claim 1 or 2, wherein the thin layer of magnesium (Mg), molybdenum (Mo), tungsten (W) or zinc (Zn) to form a first and/or the second collector.

4. The sodium-ion (Na-ion) bioeliminable accumulator according to one of the preceding claims, wherein the active material of the positive electrode is made of Na_{0.44}MnO₂ (NMO).

5. The sodium-ion (Na-ion) bioeliminable accumulator according to Claim 4, wherein the material is obtained by mixing 80 wt % NMO with 15 wt % acetylene black and with 5 wt % sodium alginate using water as a solvent.

6. The sodium-ion (Na-ion) bioeliminable accumulator according to one of the preceding claims, wherein the active material of the negative electrode is made of a NaTi₂(PO₄)₃ carbon (NTP-C) composite.

7. The sodium-ion (Na-ion) bioeliminable accumulator according to Claim 6, wherein the material is obtained by mixing NTP-C with acetylene black, Na₂SO₄ electrolyte salt and with sodium alginate using water as a solvent.

8. The sodium-ion (Na-ion) bioeliminable accumulator according to one of the preceding claims, wherein the polymer electrolyte is a gel polymer composed of an ionic conductor polymer and a Na salt..

9. The sodium-ion (Na-ion) bioeliminable accumulator according to Claim 8, wherein the ionic conductor polymer is selected among sodium alginate, sodium carboxymethyl cellulose (Na-CMC), polyethylene glycol (PEG) agarose, polyvenyl alcohol, polyethylene-polypropylene glycol copolymer.

10. The sodium-ion (Na-ion) bioeliminable accumulator according to Claim 8 or Claim 9, wherein the Na salt is selected among Na₂SO₄, Na₂SO₃, NaI, sodium acetate, phosphate buffer saline (PBS).

11. A wireless charging accumulator (WRA), comprising:
- a sodium-ion (Na-ion) bioeliminable accumulator according to one of the preceding claims,
- a wireless inductive charger (6) stacked and electrically connected together with the accumulator.

12. A process of manufacturing a sodium-ion (Na-ion) bioeliminable accumulator, including the following steps consisting in:
i/ for each of a cathode and an anode, making a wet mixture of active bioeliminable electrode material, a biocompatible binder, and a biocompatible conductive agent; pressing said wet mixture and drying to form a substrate pellet;
ii/ preparing a gel electrolyte by dissolving a biocompatible and degradable polymer electrolyte in water;
iii/ for each of the anode and the cathode, coating a layer of gel electrolyte onto one main face of one of the electrode substrates, then sandwiching said coatings by placing the two electrode substrates face-to-face, and applying a physical contact force.
iv/ for each of the anode and the cathode, depositing onto the main face of the electrode substrate, opposite to the one supporting the electrolyte gel, a thin layer of a at least one conductive biocompatible and bioresorbable metal to form a current collector.

13. The process according to Claim 12, wherein the wet mixture of step i/ comprises an electrolyte salt.

14. The process according to Claim 13, wherein the electrode wet mixture comprises the active material, the binder, a carbon black as the biocompatible conductive agent, the electrolyte salt and water as the solvent.

15. The process according to anyone of Claims 12 to 14, wherein step i/ consists of introducing the wet mixture in a mold to make the substrate by pressing with a die and left to dry for 1 to 24 h range in a 60 to 120 °C range of temperature in a vacuum oven.

16. The process according to anyone of Claims 12 to 15, wherein step ii/ consists of dissolving the polymer electrolyte in deionized water under ultrasonication at 20 to 80 °C.

17. The process according to anyone of Claims 12 to 16, wherein step iii/ comprises a step iii1/ according to which the electrolyte layer is dried in oven for 30 minutes to 24 h at 60 to 120 °C until said gel layer is dried.

18. The process according to anyone of Claims 12 to 17, wherein step iv/ deposition is achieved by a Physical Vapor Deposition (PVD) method, either by evaporation or sputtering, or a chemical vapor deposition (CVD).

19. Use of the bioeliminable accumulator according to one of claims 1 to 10 or the wireless charging accumulator (WRA) according to Claim 11 to supply energy for wearable technologies and health IOT including TMD, bioelectronics, human implants, bioelectronic devices dedicated to human/machine interfaces.
